# EUROPEAN PATENT APPLICATION

(11) **EP 2 797 216 A1**
(43) Date of publication of application: **29.10.2014**
(21) Application number: 13165610.0
(22) Date of filing: 26.04.2013
(51) Int. Cl.: H02M 3/155, H02M 7/483

(54) **DC/DC converter with auxiliary converter**

(71) Applicant: Alstom Technology Ltd, 5400 Baden (CH)
(72) Inventor: Jasim, Omar Fadhel, Nottingham NG7 5QP (GB); Trainer, David Reginald, Alvaston Derby DE24 0AQ (GB); Dyke, Kevin James, Stafford Staffordshire ST17 4YA (GB)
(74) Representative: Potter Clarkson LLP

(57) **Abstract**

A voltage source converter (10) comprises:
first, second and third branches, each branch having first and second ends, the first ends of the first, second and third branches being connected to a junction (12) to form a star configuration in which the junction (12) defines a mid-point of the star configuration, the second end of each branch defining a DC terminal, the second ends of the second and third branches being connectable to a first DC voltage (V1), the second ends of the first and second branches being connectable to a second DC voltage (V2), the first branch including at least one first primary switching element (14), the second branch including at least one second primary switching element (16), the third branch including a primary inductive element (18), each of the first and second primary switching elements (14,16) being switchable to switch the corresponding branch into and out of circuit to transfer power between the first and second DC voltages (V1,V2); and
a converter limb (22) connected in parallel with one of the first and second branches, the converter limb including an auxiliary converter (24), the auxiliary converter (24) being controllable to selectively provide a voltage source to modify a branch voltage across the branch connected in parallel with the converter limb (22).

## Description

This invention relates to a voltage source converter.

DC to DC voltage source converters operating at low power, namely 10's or 100's of kW, are used in applications such as traction drives to step-up or step-down a DC voltage to optimise the operation of the connected DC electrical network(s) and electrical load(s).

When a DC to DC voltage source converter is required to operate in high power applications at high voltage levels, the voltage rating of the DC to DC voltage source converter must be correspondingly increased. This may be achieved by using one or more series strings of a plurality of semiconductor switching devices to obtain a combined semiconductor switching device with a high voltage rating. However, connecting and switching semiconductor switching devices in a series string not only requires a complex and active gate drive, but also may require large passive snubber components to ensure proper voltage sharing among the plurality of semiconductor devices during switching. These factors not only lead to high switching losses and high levels of electromagnetic interference, but also add to the size, weight and cost of the DC to DC voltage source converter.

According to an aspect of the invention, there is provided a voltage source converter comprising:
first, second and third branches, each branch having first and second ends, the first ends of the first, second and third branches being connected to a junction to form a star configuration in which the junction defines a mid-point of the star configuration, the second end of each branch defining a DC terminal, the second ends of the second and third branches being connectable to a first DC voltage, the second ends of the first and second branches being connectable to a second DC voltage, the first branch including at least one first primary switching element, the second branch including at least one second primary switching element, the third branch including a primary inductive element, each of the first and second primary switching elements being switchable to switch the corresponding branch into and out of circuit to transfer power between the first and second DC voltages; and
a converter limb connected in parallel with one of the first and second branches, the converter limb including an auxiliary converter, the auxiliary converter being controllable to selectively provide a voltage source to modify a branch voltage across the branch connected in parallel with the converter limb.

The structure and arrangement of the first, second and third branches enables the voltage source converter to operate as a DC to DC boost converter or a DC to DC buck converter. In use, each of the first and second primary switching elements switches on and off in a switching cycle to switch the corresponding branch into and out of circuit to transfer power between the first and second DC voltages. The direction in which power is transferred between the first and second DC voltages depends on whether the voltage source converter is operating as a DC to DC boost converter or a DC to DC buck converter. The switching cycle is repeated throughout the operation of the voltage source converter.

When the voltage source converter is configured to operate as a DC to DC boost converter, the converter limb is connected across the second branch. When the voltage source converter is configured to operate as a DC to DC buck converter, the converter limb is connected across the first branch.

The connection of the converter limb across one of the first and second branches means that modification of the branch voltage across the branch connected in parallel with the converter limb can be carried out through control of the auxiliary converter to selectively provide a voltage source. This in turns means that the branch voltage can be actively modified in order to control the voltage experienced by the or each primary switching element of the branch connected in parallel with the converter limb. It will be understood that the voltage source selectively provided by the auxiliary converter may be a zero voltage source, i.e. a short circuit, or a non-zero voltage source. In this manner the voltage experienced by the or each primary switching element of the relevant branch may be modified to permit that primary switching element to be switched at zero or near-zero voltage. Such switching, which is known as soft-switching, reduces the rates of change of voltage and/or current for that primary switching element, thus reducing switching losses and electromagnetic interference for that primary switching element.

Moreover, when the relevant branch includes a plurality of series-connected primary switching elements, soft-switching simplifies voltage sharing among the plurality of series-connected primary switching elements. This advantageously reduces or eliminates the need for large voltage grading snubber circuitry. In contrast, omission of the converter limb from the voltage source converter would require the use of the large voltage grading snubber circuitry to ensure proper voltage sharing among the plurality of series-connected switching elements in the relevant branch, thus adding size, weight and cost to the voltage source converter.

The inclusion of the converter limb in the voltage source converter according to the invention therefore results in an economical, space-saving voltage source converter which is capable of operating at high voltages with reduced switching losses and electromagnetic interference.

In embodiments of the invention, the auxiliary converter may further include at least one secondary switching element being controllable to switch on to switch the auxiliary converter into circuit to permit current to flow in the converter limb or switch off to switch the auxiliary converter out of circuit to block current from flowing in the converter limb. This allows the converter limb to be readily switched out of circuit, when operation of the converter limb is not required, to ensure full current commutation to the branch connected in parallel with the converter limb. Therefore, it becomes more straightforward to design and optimise the voltage source converter since it would not be required to consider the effect of current flowing in the converter limb at times when operation of the converter limb is not required.

In further embodiments of the invention, the auxiliary converter may be a chain-link converter, the chain-link converter including a plurality of series-connected modules, each module including at least one secondary switching element and at least one energy storage device, the or each secondary switching element and the or each energy storage device in each module combining to selectively provide a voltage source.

The structure of the chain-link converter permits build up of a combined voltage across the chain-link converter, which is higher than the voltage available from each of its individual modules, via the insertion of the energy storage devices of multiple modules, each providing its own voltage, into the chain-link converter. In this manner switching of the or each secondary switching element in each module causes the chain-link converter to provide a stepped variable voltage source, which permits the generation of a voltage waveform across the chain-link converter using a step-wise approximation. As such the chain-link converter is capable of providing a wide range of voltages.

In still further embodiments of the invention, the converter limb may further include a secondary inductive element connected in series with the auxiliary converter. In DC to DC voltage source converters, a smoothing capacitor is typically connected across the second or first DC voltage. The inclusion of the secondary inductive element in the converter limb prevents a high circulating current from flowing between the auxiliary converter and the smoothing capacitor when the auxiliary converter is switched into circuit with the smoothing capacitor during operation of the voltage source converter.

The number of primary switching elements in each of the first and second branches may vary depending on the required voltage and current ratings of the associated power application.

Each switching element may include an active switching device and/or passive switching device. An active switching device may be, for example, an insulated gate bipolar transistor, a gate turn-off thyristor, a field effect transistor, an injection-enhanced gate transistor or an integrated gate commutated thyristor. A passive switching device may be, for example, a diode.

The configuration of each switching element and choice of switching device may vary depending on the type of operation of the voltage source converter according to the invention. For example, at least one switching element may include an active switching device connected in parallel with an anti-parallel passive switching device.

When the voltage source converter is configured to operate as a DC to DC boost converter, the or each first primary switching element may include a passive switching device while the or each second primary switching element may include an active switching device.

When the voltage source converter is configured to operate as a DC to DC buck converter, the or each first primary switching element may include an active switching device while the or each second primary switching element may include a passive switching device.

Preferably the voltage source converter further includes a control unit to control the auxiliary converter.

In embodiments of the invention employing the use of at least one secondary switching element being controllable to switch on or off to switch the auxiliary converter into or out of circuit, the control unit may control the switching of at least one secondary switching element of the auxiliary converter to switch the auxiliary converter out of circuit in a first blocking mode to block current from flowing in the converter limb when the branch connected in parallel with the converter limb is switched into circuit. As mentioned above, the converter limb can be readily switched out of circuit, when operation of the converter limb is not required, to ensure full current commutation to the branch connected in parallel with the converter limb. For example, the converter limb can be switched out of circuit when the first or second DC voltage is supplying energy to the primary inductive element at the start of the switching cycle.

In embodiments of the invention, the control unit may control the auxiliary converter to provide a voltage source in a bypass mode to permit current to flow in the converter limb and bypass the branch connected in parallel with the converter limb.

In the bypass mode, the auxiliary converter preferably provides a zero voltage source but alternatively may provide a near-zero voltage source. This results in current commutation from that branch to the converter limb and thereby enables soft-switching of the or each primary switching element of the branch connected in parallel with the converter limb.

In further embodiments of the invention, the control unit may control the auxiliary converter to provide a variable voltage source in a first ramping mode to ramp up the branch voltage across the branch connected in parallel with the converter limb until the branch voltage exceeds the second DC voltage.

The operation of the auxiliary converter to provide a variable voltage source in the first ramping mode allows gradual ramp-up of the branch voltage in the first ramping mode, thus providing reliable control over the switching of the or each primary switching element of each of the first and second branches.

In embodiments of the invention employing the use of at least one secondary switching element being controllable to switch on or off to switch the auxiliary converter into or out of circuit, the control unit may control the switching of at least one secondary switching element of the auxiliary converter to switch the auxiliary converter out of circuit in a second blocking mode to block current from flowing in the converter limb after the branch voltage exceeds the second DC voltage.

When the voltage source converter is configured to operate as a DC to DC boost converter, the or each first primary switching element is driven into conduction after the branch voltage exceeds the second DC voltage. This connects the first DC voltage to the second DC voltage and thereby permits transfer of power and energy from the first DC voltage and the primary inductive element to the second DC voltage. At this stage operation of the converter limb is not required, and so the converter limb can be switched out of circuit in the second blocking mode.

When the voltage source converter is configured to operate as a DC to DC buck converter, the or each second primary switching element is driven into conduction after the branch voltage exceeds the second DC voltage. This permits transfer of energy to the first DC voltage by way of release of energy from the primary inductive element. At this stage operation of the converter limb is not required, and so the converter limb can be switched out of circuit in the second blocking mode.

In embodiments of the invention, the control unit may control the auxiliary converter to provide a variable voltage source in a second ramping mode to ramp down the branch voltage across the branch connected in parallel with the converter limb until the branch voltage reaches a zero or near-zero value.

When the voltage source converter is configured to operate as a DC to DC boost converter, the branch voltage is ramped down to a zero or near-zero value in the second ramping mode after the or each first primary switching element stops conducting. This enables soft-switching of the or each second primary switching element when the or each second primary switching element is switched on to complete the switching cycle and thereby permit the first DC voltage to once again supply energy to the primary inductive element.

When the voltage source converter is configured to operate as a DC to DC buck converter, the branch voltage is ramped down to a zero or near-zero value in the second ramping mode and the or each second primary switching element stops conducting. This enables soft-switching of the or each first primary switching element when the or each first primary switching element is switched on to complete the switching cycle and thereby permit the second DC voltage to once again supply energy to the primary inductive element.

As indicated above with respect to the first ramping mode, the operation of the auxiliary converter to provide a variable voltage source in the second ramping mode provides reliable control over the switching of the or each primary switching element of each of the first and second branches.

Moreover, when the auxiliary converter is a chain-link converter, the ability of the chain-link converter to generate a voltage waveform using a step-wise approximation, together with the modular arrangement of the chain-link converter, enables the structure of the chain-link converter to be readily optimised to provide a desired ramp-up or ramp-down of the branch voltage in the first or second ramping mode without having to significantly alter the other components of the voltage source converter.

In embodiments of the invention, the control unit may control the switching of the or each secondary switching element in each module of the chain-link converter to selectively charge or discharge at least one energy storage device in at least one module of the chain-link converter when current flows in the converter limb. During the operation of the voltage source converter, the or each energy storage device in each module of the chain-link converter may charge and discharge in a single switching cycle as a result of current flowing in the converter limb.

In further embodiments of the invention, the voltage source converter may include two converter limbs, each converter limb being connected across a respective one of the first and second branches, each converter limb including an auxiliary converter, each auxiliary converter being controllable to selectively provide a voltage source to modify a branch voltage across the branch connected in parallel with the corresponding converter limb. The configuration of the voltage source converter in this manner enables soft-switching of both the first and second primary switching elements during the switching cycle. This is particularly useful when the voltage source converter is configured to operate as both a DC to DC boost converter and a DC to DC buck converter.

When the voltage source converter is configured to operate as both a DC to DC boost converter and a DC to DC buck converter, the or each first primary switching element may include an active switching device connected in parallel with an anti-parallel passive switching device while the or each second primary switching element may include an active switching device connected in parallel with an anti-parallel passive switching device.

Preferred embodiments of the invention will now be described, by way of example only, with reference to the accompanying drawings in which:
Figure 1 shows, in schematic form, a voltage source converter according to a first embodiment of the invention;
Figures 2a to 2g illustrate, in schematic form, the operation of the voltage source converter of Figure 1 as a DC to DC boost converter;
Figure 3 illustrates, in graph form, the changes in voltage in the voltage source converter of Figure 1 during its operation as a DC to DC boost converter;
Figure 4 shows, in schematic form, a voltage source converter according to a second embodiment of the invention;
Figures 5a to 5g illustrate, in schematic form, the operation of the voltage source converter of Figure 4 as a DC to DC buck converter;
Figure 6 illustrates, in graph form, the changes in voltage in the voltage source converter of Figure 4 during its operation as a DC to DC buck converter; and
Figure 7 shows, in schematic form, a voltage source converter according to a third embodiment of the invention.

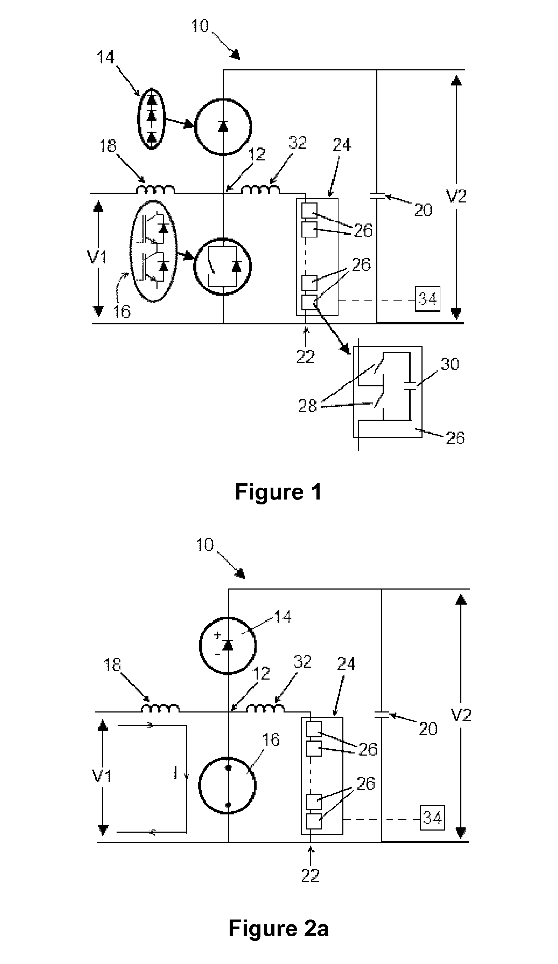

A first voltage source converter 10 according to a first embodiment of the invention is shown in Figure 1.

The first voltage source converter 10 includes first, second and third branches. Each branch has first and second ends.

The first ends of the first, second and third branches are connected to a junction 12 to form a star configuration in which the junction 12 defines a mid-point of the star configuration.

The second end of each branch defines a DC terminal. In use, the second ends of the second and third branches are connected to a first DC voltage V1, and the second ends of the first and second branches are connected to a second DC voltage V2. In the embodiment shown, the first DC voltage V1 is smaller than the second DC voltage V2.

The first branch includes a plurality of series-connected first primary switching elements 14, each of which is constituted by a semiconductor device in the form of a diode. The second branch includes a plurality of series-connected second primary switching elements 16, each of which is constituted by a semiconductor device in the form of an insulated gate bipolar transistor (IGBT) which is connected in parallel with an anti-parallel diode. The third branch includes a primary inductive element in the form of a primary reactor 18.

In use, each of the first and second primary switching elements 14,16 is switchable to switch the corresponding branch into and out of circuit with the other components of the first voltage source converter 10.

The first voltage source converter 10 also includes a smoothing capacitor 20 connected in parallel with the second ends of the first and second branches. As such, in use, the smoothing capacitor 20 is connected in parallel with the second DC voltage V2.

The first voltage source converter 10 further includes a converter limb 22 connected in parallel with the second branch. The converter limb 22 includes an auxiliary converter in the form of a chain-link converter 24.

The chain-link converter 24 includes a plurality of series-connected modules 26. Each module 26 includes a pair of secondary switching elements 28 and an energy storage device in the form of a capacitor 30. The secondary switching elements 28 are connected in parallel with the capacitor 30 in a half-bridge arrangement to define a 2-quadrant unipolar module 26 that can provide zero or positive voltage and can conduct current I in two directions.

Each secondary switching element 28 is constituted by a semiconductor device in the form of an IGBT which is connected in parallel with an anti-parallel diode.

It is envisaged that, in other embodiments of the invention, the capacitor 30 may be replaced by another energy storage device that is capable of storing or releasing energy, e.g. a battery.

The capacitor 30 of each module 26 is selectively bypassed or inserted into the chain-link converter 24 by changing the state of the secondary switching elements 28. This selectively directs current I through the capacitor 30 or causes current I to bypass the capacitor 30, so that each module 26 provides a zero or positive voltage.

The capacitor 30 of each module 26 is bypassed when the pair of secondary switching elements 28 in each module 26 is configured to form a short circuit in the module 26. This causes current I in the chain-link converter 24 to pass through the short circuit and bypass the capacitor 30, and so the module 26 provides a zero voltage, i.e. the module 26 is configured in a bypassed mode.

The capacitor 30 of each module 26 is inserted into the chain-link converter 24 when the pair of secondary switching elements 28 in each module 26 is configured to allow the current I in the chain-link converter 24 to flow into and out of the capacitor 30. The capacitor 30 then charges or discharges its stored energy so as to provide a positive voltage, i.e. the module 26 is configured in a non-bypassed mode.

It is possible to build up a combined voltage across the chain-link converter 24, which is higher than the voltage available from each of its individual modules 26, via the insertion of the capacitors 30 of multiple modules 26, each providing its own voltage, into the chain-link converter 24. In this manner switching of the secondary switching elements 28 of each module 26 causes the chain-link converter 24 to provide a stepped variable voltage source, which permits the generation of a voltage waveform across the chain-link converter 24 using a step-wise approximation.

Also, the secondary switching elements 28 in each module 26 of the chain-link converter 24 can be configured to switch the chain-link converter 24 into circuit to permit current I to flow in the converter limb 22 or effectively switch the chain-link converter 24 out of circuit to block current I from flowing in the converter limb 22.

The converter limb 22 further includes a secondary inductive element connected in series with the chain-link converter 24. The secondary inductive element is in the form of a secondary reactor 32.

The first voltage source converter 10 further includes a control unit 34 to control the switching of the secondary switching elements 28 in each module 26 of the chain-link converter 24.

It is envisaged that, in other embodiments of the invention, each IGBT may be replaced by another type of active switching device, while each diode may be replaced by another type of passive switching device.

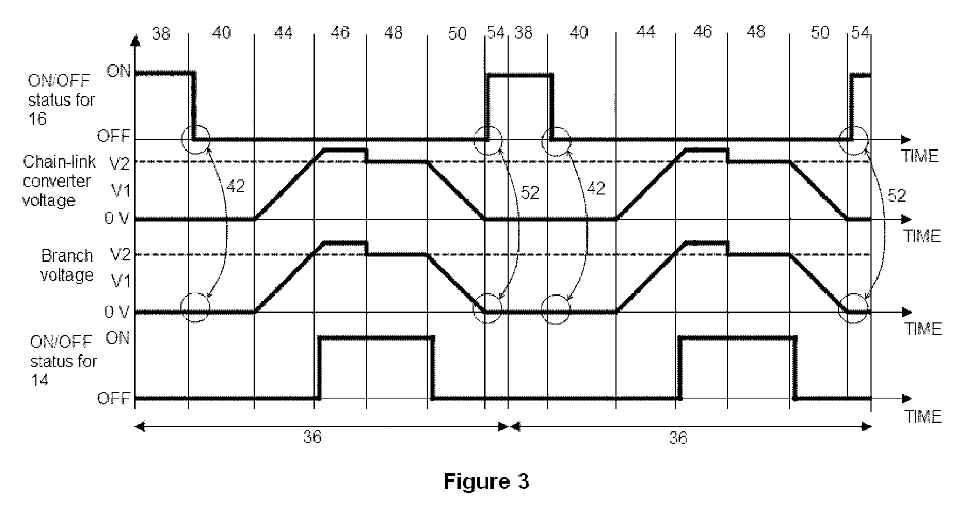

A switching cycle 36 of the operation of the first voltage source converter 10 of Figure 1 as a DC to DC boost converter is described as follows, with reference to Figures 2a to 2g and 3.

Figure 3 illustrates, in graph form, the changes in voltage across the plurality of series-connected second primary switching elements 16 and the chain-link converter 24 during the operation of the first voltage source converter 10 of Figure 1 as a DC to DC boost converter.

At the start of the switching cycle 36, the plurality of series-connected second primary switching elements 16 is switched on, i.e. the second branch is switched into circuit. Current I therefore flows from the first DC voltage V1 through the primary reactor 18 of the third branch, through the plurality of series-connected second primary switching elements 16 of the first branch and back into the first DC voltage V1, as shown in Figure 2a. In this manner the first DC voltage V1 supplies energy to the primary reactor 18. Meanwhile the plurality of series-connected first primary switching elements 14 is reverse-biased and therefore does not conduct any current I, i.e. the first branch is switched out of circuit. At this stage the control unit 34 controls the switching of the secondary switching elements 28 in each module 26 of the chain-link converter 24 to switch the chain-link converter 24 out of circuit in a first blocking mode 38 to block current I from flowing in the converter limb 22.

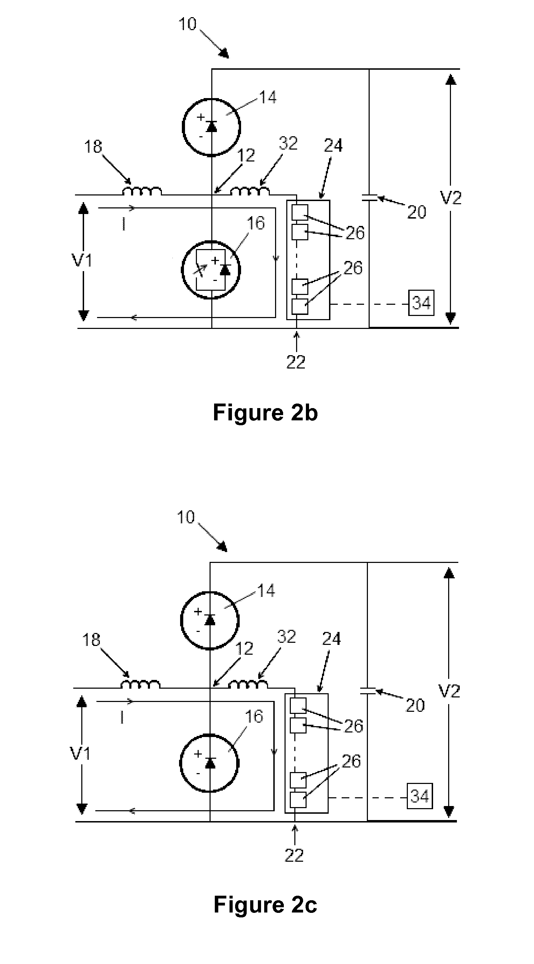

After a predefined period of time has lapsed, the control unit 34 controls the switching of the secondary switching elements 28 in each module 26 of the chain-link converter 24 to switch the chain-link converter 24 to provide a zero voltage source in a bypass mode 40. The provision of a zero voltage source in the converter limb 22 causes the converter limb 22 to act as a short circuit which permits the current I flowing from the first DC voltage V1 to flow in the converter limb 22 and bypass the second branch, as shown in Figure 2b. This in turn causes a branch voltage across the second branch to be held at near-zero voltage. Therefore, the voltage experienced by the plurality of series-connected second primary switching elements 16 is also held at near-zero voltage. The plurality of series-connected second primary switching elements 16 is then switched off 42 at near-zero voltage.

After the plurality of series-connected second primary switching elements 16 is switched off, the control unit 34 controls the switching of the secondary switching elements 28 in each module 26 of the chain-link converter 24 to provide a variable voltage source in a first ramping mode 44 to ramp up the branch voltage across the second branch from near-zero voltage to slightly higher than the second DC voltage V2. During the first ramping mode 44, the inserted capacitors 30 of the chain-link converter 24 are charged by the current I flowing from the first DC voltage V1, as shown in Figure 2c.

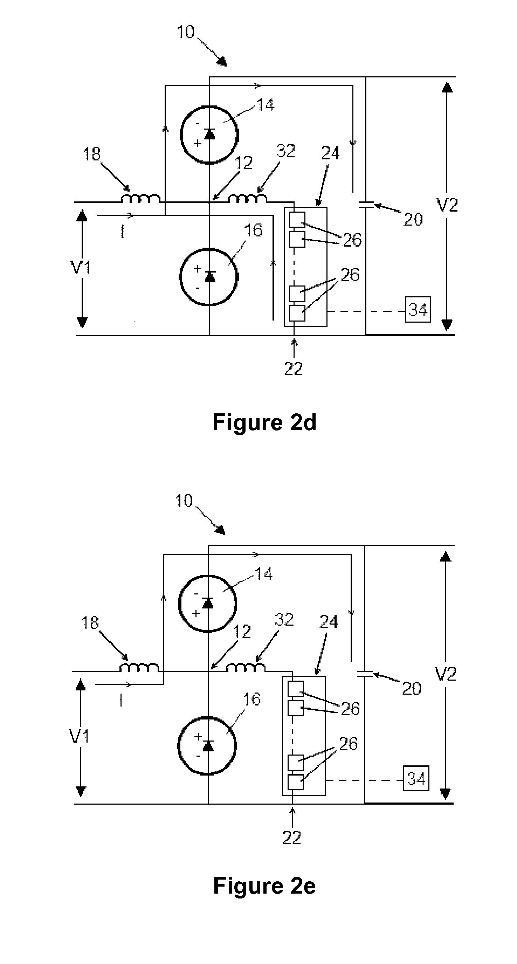

Once the branch voltage exceeds the second DC voltage V2, the plurality of series-connected first primary switching elements 14 is driven into conduction 46. This causes current I from the first DC voltage V1 to be commutated from the converter limb 22 to the first branch, as shown in Figure 2d. In this manner the first DC voltage V1 is connected to the second DC voltage V2 and so power and energy is transferred from the first DC voltage V1 and the primary reactor 18 to the second DC voltage V2. At the same time the inserted capacitors 30 of the chain-link converter 24 discharge, thereby causing a current to flow from the converter limb 22 into the first branch. Such discharging can occur when all or some of the capacitors 30 have previously received additional charge and increased their voltage.

The secondary reactor 32 in the converter limb 22 prevents a high circulating current I from flowing between the chain-link converter 24 and the smoothing capacitor 20 which are now switched into circuit with each other.

After the current I flowing from the first DC voltage V1 has fully commutated to the first branch, the control unit 34 controls the switching of the secondary switching elements 28 in each module 26 of the chain-link converter 24 to switch the chain-link converter 24 out of circuit in a second blocking mode 48 to block current I from flowing in the converter limb 22, as shown in Figure 2e.

Current I continues to flow in the first branch and so power continues to be transferred from the first DC voltage V1 and the primary reactor 18 to the second DC voltage V2 for as long as the sum of the first DC voltage V1 and primary reactor voltage is higher than the second DC voltage V2.

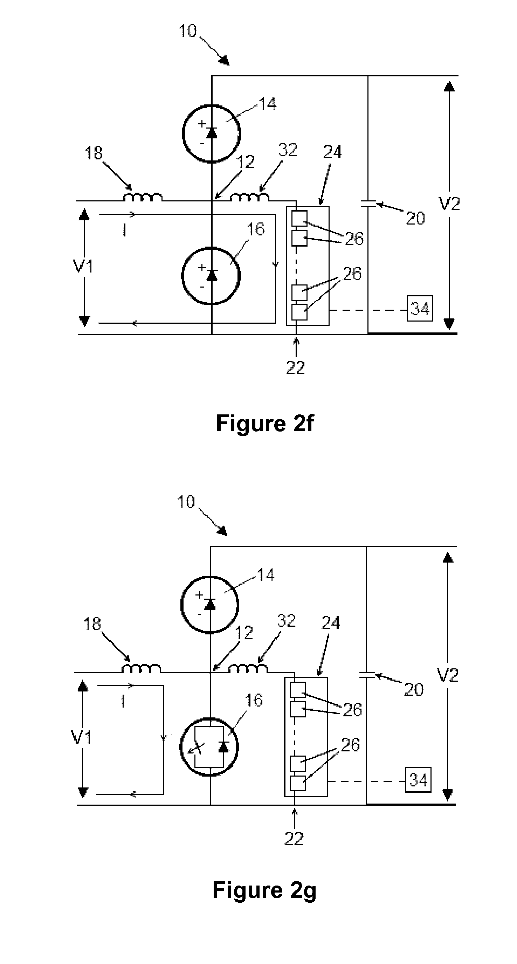

After the sum of the first DC voltage V1 and primary reactor voltage drops below the second DC voltage V2, the plurality of series-connected first primary switching elements 14 becomes reverse-biased and stops conducting current I. The control unit 34 then controls the switching of the secondary switching elements 28 in each module 26 of the chain-link converter 24 to provide a variable voltage source in a second ramping mode 50 to ramp down the branch voltage across the second branch to near-zero voltage. During the second ramping mode 50, the inserted capacitors 30 of the chain-link converter 24 are charged by the current I flowing from the first DC voltage V1, as shown in Figure 2f. Such charging can occur when all or some of the capacitors 30 have previously discharged and decreased their voltage.

Once the branch voltage is reduced to near-zero voltage, the plurality of series-connected second primary switching elements 16 is switched back on 52 at near-zero voltage. At this stage the control unit 34 controls the switching of the secondary switching elements 28 in each module 26 of the chain-link converter 24 to switch 54 the chain-link converter 24 out of circuit in a first blocking mode 38 to block current I from flowing in the converter limb 22, as shown in Figure 2g. This completes the switching cycle 36 and thereby permits the first DC voltage V1 to once again supply energy to the primary reactor 18.

The switching cycle 36 is repeated throughout the operation of the first voltage source converter 10.

In this manner the first voltage source converter 10 is able to operate as a DC to DC boost converter to transfer power from the first DC voltage V1 to the second DC voltage V2.

Switching the plurality of series-connected second primary switching elements 16 at near-zero voltage, i.e. soft switching of the plurality of series-connected second primary switching elements 16, reduces the rates of change of voltage and/or current I for the plurality of series-connected second primary switching elements 16, thus reducing switching losses and electromagnetic interference for the plurality of series-connected second primary switching elements 16.

Moreover soft-switching of the plurality of series-connected second primary switching elements 16 simplifies voltage sharing. This advantageously reduces or eliminates the need for large voltage grading snubber circuitry. In contrast, omission of the converter limb 22 from the first voltage source converter 10 would require the use of the large voltage grading snubber circuitry to ensure proper voltage sharing among the plurality of series-connected second primary switching elements 16, thus adding size, weight and cost to the first voltage source converter 10.

The inclusion of the converter limb 22 in the first voltage source converter 10 according to the invention therefore results in an economical, space-saving voltage source converter which is capable of operating at high voltages with reduced switching losses and electromagnetic interference.

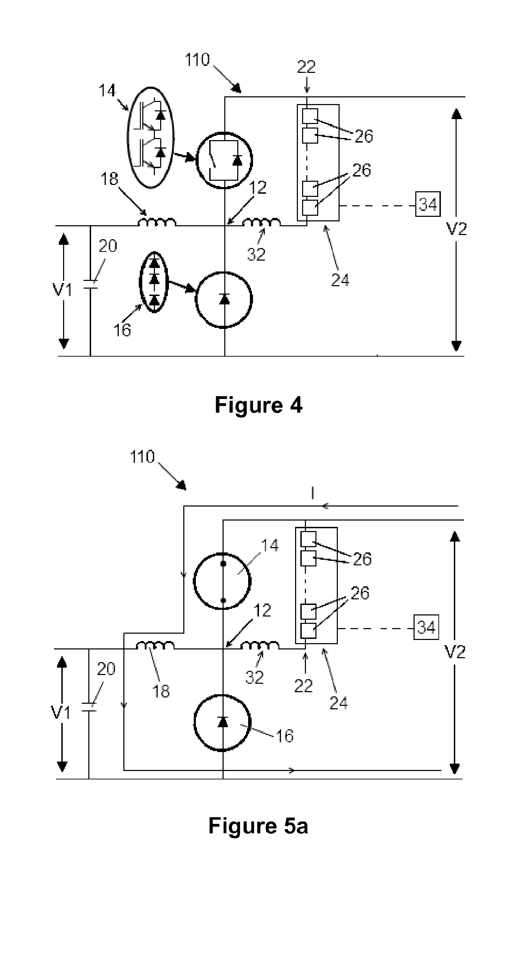

A second voltage source converter 110 according to a second embodiment of the invention is shown in Figure 4. The second voltage source converter 110 of Figure 4 is similar in structure to the first voltage source converter 10 of Figure 1, and like features share the same reference numerals.

The second voltage source converter 110 differs from the first voltage source converter 10 in that, in the second voltage source converter 110:
- each first primary switching element 14 is constituted by a semiconductor device in the form of an IGBT connected in parallel with an anti-parallel diode;
- each second primary switching element 16 is constituted by a semiconductor device in the form of a diode;
- the converter limb 22 is connected in parallel with the first branch;
- the smoothing capacitor 20 is connected in parallel with the second ends of the second and third branches. As such, in use, the smoothing capacitor 20 is connected in parallel with the first DC voltage V1.

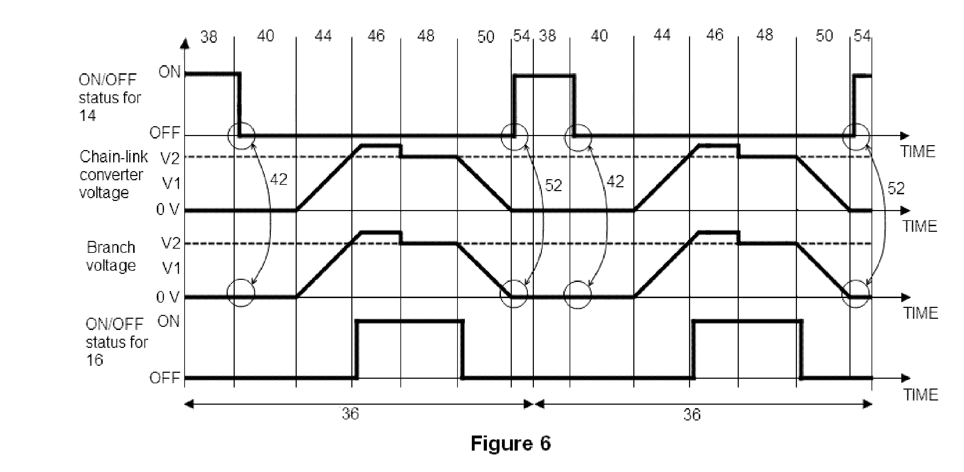

A switching cycle 36 of the operation of the second voltage source converter 110 of Figure 4 as a DC to DC buck converter is described as follows, with reference to Figures 5a to 5g and 6.

Figure 6 illustrates, in graph form, the changes in voltage across the plurality of series-connected first primary switching elements 14 and the chain-link converter 24 during the operation of the second voltage source converter 110 of Figure 4 as a DC to DC buck converter.

At the start of the switching cycle 36, the plurality of series-connected first primary switching elements 14 is switched on, i.e. the first branch is switched into circuit. Current I therefore flows from the second DC voltage V2, through the plurality of series-connected first primary switching elements 14 of the first branch, through the primary reactor 18 of the third branch and back into the second DC voltage V2, as shown in Figure 5a. In this manner the second DC voltage V2 supplies energy to the primary reactor 18. Meanwhile the plurality of series-connected second primary switching elements 16 is reverse-biased and therefore does not conduct any current I, i.e. the second branch is switched out of circuit. At this stage the control unit 34 controls the switching of the secondary switching elements 28 in each module 26 of the chain-link converter 24 to switch the chain-link converter 24 out of circuit in a first blocking mode 38 to block current I from flowing in the converter limb 22.

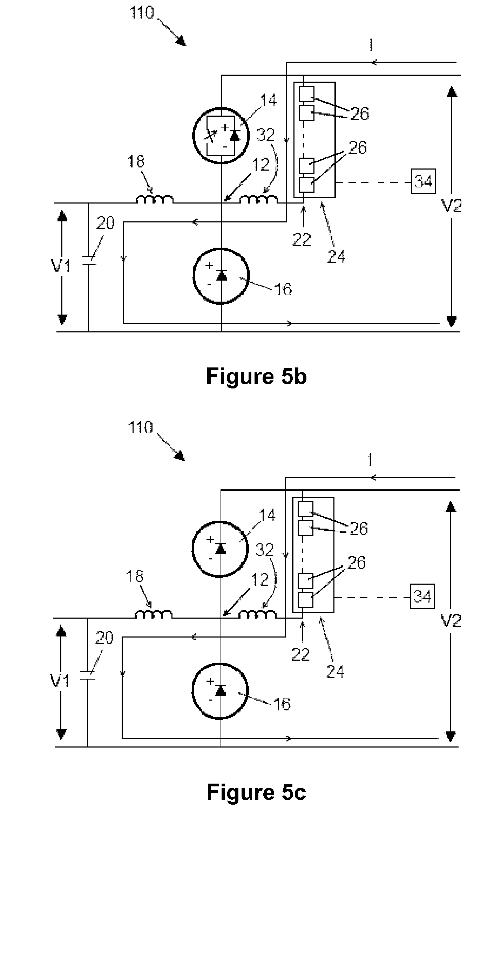

After a predefined period of time has lapsed, the control unit 34 controls the switching of the secondary switching elements 28 in each module 26 of the chain-link converter 24 to switch the chain-link converter 24 to provide a zero voltage source in a bypass mode 40. The provision of a zero voltage source in the converter limb 22 causes the converter limb 22 to act as a short circuit which permits the current I flowing from the second DC voltage V2 to flow in the converter limb 22 and bypass the first branch, as shown in Figure 5b. This in turn causes a branch voltage across the first branch to be held at near-zero voltage. Therefore, the voltage experienced by the plurality of series-connected first primary switching elements 14 is also held at near-zero voltage. The plurality of series-connected first primary switching elements 14 is then switched off 42 at near-zero voltage.

After the plurality of series-connected first primary switching elements 14 is switched off, the control unit 34 controls the switching of the secondary switching elements 28 in each module 26 of the chain-link converter 24 to provide a variable voltage source in a first ramping mode 44 to ramp up the branch voltage across the first branch from near-zero voltage to slightly higher than the second DC voltage V2. During the first ramping mode 44, the inserted capacitors 30 of the chain-link converter 24 are charged by the current I flowing from the second DC voltage V2, as shown in Figure 5c.

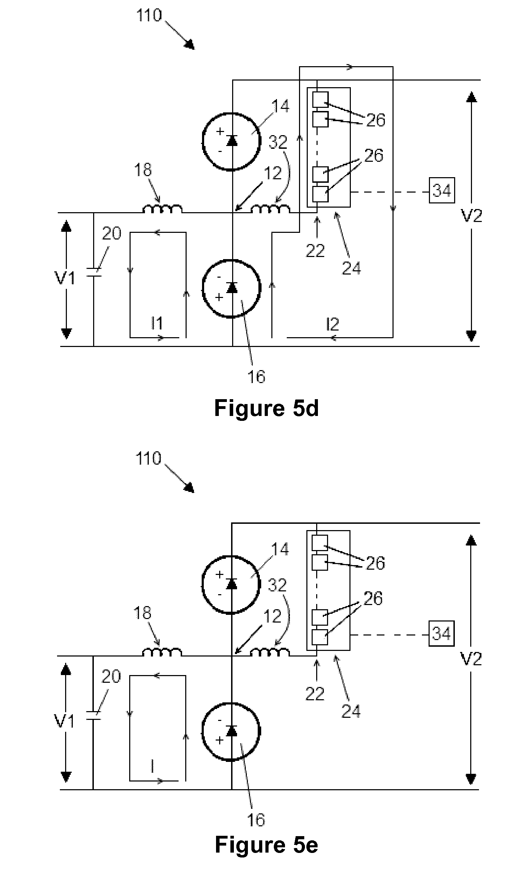

Once the branch voltage exceeds the second DC voltage V2, the plurality of series-connected second primary switching elements 16 is driven into conduction 46. This causes current to flow through the plurality of series-connected second primary switching elements 16, whereby the current is a combination of first and second current components I1,I2, as shown in Figure 5d. The first current component I1 flows in a first current path that includes the second branch, third branch and the first DC voltage V1. In this manner energy is transferred to the first DC voltage V1 by way of release of energy from the primary reactor 18. At the same time the inserted capacitors 30 of the chain-link converter 24 discharge, thereby causing the second current component I2 to flow in a second current path that includes the second branch, the converter limb 22 and the second DC voltage V2. Such discharging can occur when all or some of the capacitors 30 have previously received additional charge and increased their voltage.

Thereafter, the control unit 34 controls the switching of the secondary switching elements 28 in each module 26 of the chain-link converter 24 to switch the chain-link converter 24 out of circuit in a second blocking mode 48 to block current I from flowing in the converter limb 22, as shown in Figure 5e.

Current I continues to flow in the first current path and so power continues to be transferred from the primary reactor 18 to the first DC voltage V1.

The control unit 34 then controls the switching of the secondary switching elements 28 in each module 26 of the chain-link converter 24 to provide a variable voltage source in a second ramping mode 50 to ramp down the branch voltage across the first branch to near-zero voltage. At this stage the plurality of series-connected second primary switching elements 16 are reverse-biased and therefore do not conduct current.

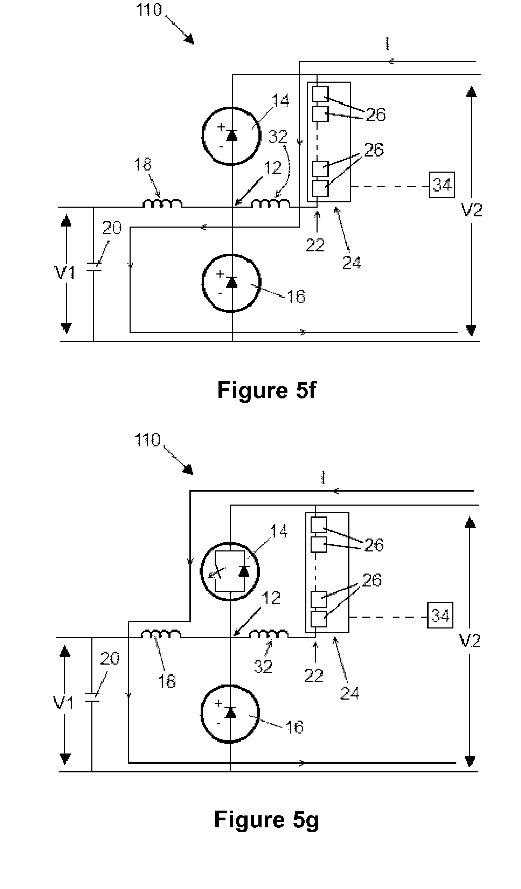

During the second ramping mode 50, the inserted capacitors 30 of the chain-link converter 24 are charged by the current I flowing from the second DC voltage V2, as shown in Figure 5f. Such charging can occur when all or some of the capacitors 30 have previously discharged and decreased their voltage.

Once the branch voltage is reduced to near-zero voltage, the plurality of series-connected first primary switching elements 14 is switched back on 52 at near-zero voltage. At this stage the control unit 34 controls the switching of the secondary switching elements 28 in each module 26 of the chain-link converter 24 to switch 54 the chain-link converter 24 out of circuit in a first blocking mode 38 to block current I from flowing in the converter limb 22, as shown in Figure 5g. This completes the switching cycle 36 and thereby permits the second DC voltage V2 to once again supply energy to the primary reactor 18 via the plurality of series-connected first primary switching elements 14.

The switching cycle 36 is repeated throughout the operation of the second voltage source converter 110.

In this manner the second voltage source converter 110 is able to operate as a DC to DC buck converter to transfer power from the second DC voltage V2 to the first DC voltage V1.

The inclusion of the converter limb 22 in the second voltage source converter 110 enables soft-switching of each first primary switching element 14 during a switching cycle 36 of the operation of the second voltage source converter 110 as a DC to DC buck converter.

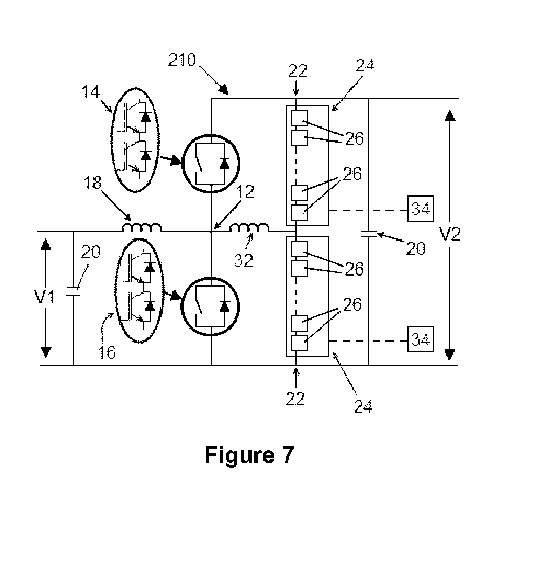

A third voltage source converter 210 according to a third embodiment of the invention is shown in Figure 7. The third voltage source converter 210 of Figure 7 is similar in structure to the first voltage source converter 10 of Figure 1, and like features share the same reference numerals.

The third voltage source converter 210 differs from the first voltage source converter 10 in that:
- in the third voltage source converter 210, each first primary switching element 14 is constituted by a semiconductor device in the form of an insulated gate bipolar transistor (IGBT) connected in parallel with an anti-parallel diode;
- the third voltage source converter 210 includes two converter limbs 22.

Each converter limb 22 of the third voltage source converter 210 is connected across a respective one of the first and second branches. Each converter limb 22 of the third voltage source converter 210 is similar in structure and operation to the converter limb 22 of the first voltage source converter 10.

The third voltage source converter further includes an additional smoothing capacitor 20 that is connected in parallel with the second ends of the second and third branches. As such, in use, the additional smoothing capacitor 20 is connected in parallel with the first DC voltage V1.

The configuration of the third voltage source converter 210 in this manner allows the third voltage source converter 210 to operate as a DC to DC boost converter in the same manner as that described above with respect to the first voltage source converter 10 and as a DC to DC buck converter in the same manner as that described above with respect to the second voltage source converter 110.

The inclusion of the converter limbs 22 in the third voltage source converter 210 enables soft-switching of each first or second primary switching element 16 during a switching cycle of the operation of the third voltage source converter 210 as a DC to DC buck converter or a DC to DC boost converter.

## Claims

1. A voltage source converter comprising:
first, second and third branches, each branch having first and second ends, the first ends of the first, second and third branches being connected to a junction to form a star configuration in which the junction defines a mid-point of the star configuration, the second end of each branch defining a DC terminal, the second ends of the second and third branches being connectable to a first DC voltage, the second ends of the first and second branches being connectable to a second DC voltage, the first branch including at least one first primary switching element, the second branch including at least one second primary switching element, the third branch including a primary inductive element, each of the first and second primary switching elements being switchable to switch the corresponding branch into and out of circuit to transfer power between the first and second DC voltages; and
a converter limb connected in parallel with one of the first and second branches, the converter limb including an auxiliary converter, the auxiliary converter being controllable to selectively provide a voltage source to modify a branch voltage across the branch connected in parallel with the converter limb.

2. A voltage source converter according to Claim 1 wherein the auxiliary converter further includes at least one secondary switching element being controllable to switch on to switch the auxiliary converter into circuit to permit current to flow in the converter limb or switch off to switch the auxiliary converter out of circuit to block current from flowing in the converter limb.

3. A voltage source converter according to any preceding claim wherein the auxiliary converter is a chain-link converter, the chain-link converter including a plurality of series-connected modules, each module including at least one secondary switching element and at least one energy storage device, the or each secondary switching element and the or each energy storage device in each module combining to selectively provide a voltage source.

4. A voltage source converter according to any preceding claim wherein the converter limb further includes a secondary inductive element connected in series with the auxiliary converter.

5. A voltage source converter according to any preceding claim wherein each switching element includes an active switching device and/or passive switching device.

6. A voltage source converter according to Claim 5 wherein at least one switching element includes an active switching device connected in parallel with an anti-parallel passive switching device.

7. A voltage source converter according to any preceding claim further including a control unit to control the auxiliary converter.

8. A voltage source converter according to Claim 7 when dependent from Claim 2 wherein the control unit controls the switching of at least one secondary switching element of the auxiliary converter to switch the auxiliary converter out of circuit in a first blocking mode to block current from flowing in the converter limb when the branch connected in parallel with the converter limb is switched into circuit.

9. A voltage source converter according to Claim 7 or Claim 8 wherein the control unit controls the auxiliary converter to provide a voltage source in a bypass mode to permit current to flow in the converter limb and bypass the branch connected in parallel with the converter limb.

10. A voltage source converter mode according to any of Claims 7 to 9 wherein the control unit controls the auxiliary converter to provide a variable voltage source in a first ramping mode to ramp up the branch voltage across the branch connected in parallel with the converter limb until the branch voltage exceeds the second DC voltage.

11. A voltage source converter according to Claim 10 when dependent from Claim 2 wherein the control unit controls the switching of at least one secondary switching element of the auxiliary converter to switch the auxiliary converter out of circuit in a second blocking mode to block current from flowing in the converter limb after the branch voltage exceeds the second DC voltage.

12. A voltage source converter according to any of Claims 7 to 11 wherein the control unit controls the auxiliary converter to provide a variable voltage source in a second ramping mode to ramp down the branch voltage across the branch connected in parallel with the converter limb until the branch voltage reaches a zero or near-zero value.

13. A voltage source converter according to any of Claims 7 to 12 when dependent from Claim 3 wherein the control unit controls the switching of the or each secondary switching element in each module of the chain-link converter to selectively charge or discharge at least one energy storage device in at least one module of the chain-link converter when current flows in the converter limb.

14. A voltage source converter according to any preceding claim including two converter limbs, each converter limb being connected across a respective one of the first and second branches, each converter limb including an auxiliary converter, each auxiliary converter being controllable to selectively provide a voltage source to modify a branch voltage across the branch connected in parallel with the corresponding converter limb.
